# EUROPÄISCHE PATENTANMELDUNG

(11) **EP 0 941 951 A1**
(43) Veröffentlichungstag der Anmeldung: **15.09.1999**
(21) Anmeldenummer: 99104361.3
(22) Anmeldetag: 04.03.1999
(51) Int. Cl.: B65G 47/90

(54) **Zangenartige Greifereinrichtung**

(30) Priorität: 10.03.1998 DE 19810248; 12.05.1998 DE 19821187
(71) Anmelder: Quelle Schickedanz AG & Co., 90762 Fürth (DE)
(72) Erfinder: Büschel, Steffan, 90762 Fürth (DE); Häussler, Jörg, 90480 Nürnberg (DE); Christ, Ferdinand, 91575 Windsbach (DE)
(74) Vertreter: Matschkur, Lindner Blaumeier Patent- und Rechtsanwälte

(57) **Zusammenfassung**

Zangenartige Greifereinrichtung (1) zum Greifen eines mittels dieser zu bewegenden Softgood-Artikels, insbesondere für eine Kommissioniervorrichtung (49) zum Kommissionieren von Softgood-Artikeln, wobei die Greifereinrichtung (1) mittels eines externen Bewegungsmechanismus maschinell bewegbar ist, und zwei Schenkel (2,3;27,28) aufweist, zwischen denen ein Abschnitt des Artikels aufnehmbar ist, wobei beide Schenkel (2,3;27,28) beweglich gelagert und zwischen einer den Artikel greifenden Arbeitsstellung und einer Nichtarbeitsstellung mittels eines Bewegungsmittels (14,42) bewegbar sind.

## Beschreibung

Die Erfindung betrifft eine zangenartige Greifereinrichtung zum Greifen eines mittels dieser zu bewegenden Softgood-Artikels, insbesondere für eine Kommissioniervorrichtung zum Kommissionieren von Softgood-Artikeln.

Das automatische Handling von Softgood-Artikeln, also Artikeln die nicht in festen Verpackungen oder dergleichen beinhaltet sind, bereitet allgemein ein großes Problem. Insbesondere im Bereich des Versandhandels, wo bei großen Versandhäusern täglich mehrere tausend solcher Artikel im Rahmen von Kommissioniervorgängen zur Zusammenstellung von Kundenaufträgen bewegt werden müssen, sind diese Probleme evident. Eine rechnergesteuerte Kommissioniervorrichtung zum Kommissionieren von Softgood-Artikeln, die einen automatischen Transport dieser Artikel ermöglicht, ist in der Patentanmeldung 196 39 049 beschrieben. Bei der dort offenbarten Vorrichtung liegen die auftragsabhängig zu bewegenden Softgood-Artikel übereinandergestapelt in entsprechenden Aufnahmen. Jede Aufnahme ist ein automatisch bewegbares Ausgabemittel zugeordnet, welches oberseitig an dem jeweiligen Artikel angreift, diesen packt und heraushebt. Dabei kann dieses Ausgabemittel als zangenartiger Greifer ausgebildet sein.

Der Erfindung liegt nun das Problem zugrunde, eine zangenartige Greifeinrichtung anzugeben, die - beispielsweise bei Einsatz in der aus der oben beschriebenen Patentanmeldung bekannten Kommissioniervorrichtung - ein sicheres Greifen des Softgood-Artikels ermöglicht.

Zur Lösung dieses Problems ist erfindungsgemäß eine zangenartige Greifereinrichtung vorgesehen, die mittels eines externen Bewegungsmechanismus maschinell bewegbar ist und zwei Schenkel aufweist, zwischen denen ein Abschnitt des Artikels aufnehmbar ist, wobei beide Schenkel beweglich gelagert sind und zwischen einer den Artikel greifenden Arbeitsstellung und einer Nichtarbeitsstellung mittels eines Bewegungsmittels bewegbar sind.

Mittels dieser erfindungsgemäßen Greifereinrichtung, bei der also beide Schenkel beweglich sind, ist ein sicheres Greifen des beispielsweise in Folie eingeschweißten Kleidungsstückes möglich. Durch die bewegliche Lagerung beider Schenkel ist die Bewegungsstrecke bzw. die Greiferstrecke, die die Schenkel zwischen der Nichtarbeitsstellung und der Arbeitsstellung zurücklegen, annähernd die doppelte wie bei einer Ausführungsform einer Greifereinrichtung, bei der lediglich ein Schenkel bewegbar ist. Dies bedeutet, daß von der Folie bzw. dem Artikel ein wesentlich größerer Abschnitt gegriffen werden kann, so daß mit der erfindungsgemäßen Greifereinrichtung sichergestellt ist, daß ein Leergreifen oder ein nur teilweiser Angriff, der gegebenenfalls zum Runterfallen des angehobenen Artikels führt, vorteilhaft vermieden wird. Dabei können erfindungsgemäß beide Schenkel um eine gemeinsame Achse gelagert sein, oder um jeweils separate, zueinander im wesentlichen parallele Achsen.

Als besonders zweckmäßig hat es sich ferner erwiesen, wenn erfindungsgemäß die beiden Schenkel über eine Gelenkverbindung, insbesondere ein Gelenkgestänge miteinander bewegungsgekoppelt und mittels des gemeinsamen, an der Gelenkverbindung angreifenden Bewegungsmittels bewegbar sind. Infolge der Zwangskopplung werden also vorteilhaft beide Schenkel zwingend gemeinsam bewegt. Der Einsatz der Gelenkverbindung ermöglicht ferner vorteilhaft die Verwendung nur eines Bewegungsmittels. Diese kann erfindungsgemäß eine pneumatisches, elektrisches oder elektromagnetisches Mittel sein, beispielsweise ein Zug-Druckzylinder, der über seine Schubstange an der Gelenkverbindung angreift. Selbstverständlich ist auch eine Ausgestaltung in Form eines Tauchmagneten oder eines Elektromotors oder dergleichen möglich.

Wie beschrieben ist es eine zentrale Aufgabe der erfindungsgemäßen Greifereinrichtung, den sicheren und ausreichenden Angriff am Artikel zu gewährleisten. Um hier weitergehende Sicherheit zu schaffen, kann erfindungsgemäß die Greifereinrichtung derart ausgebildet sein, oder derart ausgebildete Mittel vorgesehen sein, daß in Verbindungen mit einer gegebenenfalls externen Ermittlungseinrichtung ein sich zwischen den Schenkeln befindlicher Abschnitt des gegriffenen Artikels ermittelbar ist. Gemäß dieser erfindungsgemäßen Ausgestaltung wird also zusätzlich zu den gegebenen, rein mechanischen Vorteilen noch eine Ermittlungsmöglichkeit angegeben, die ein Überprüfen eines konkreten Artikelangriffs zuläßt. Gemäß einer ersten Erfindungsalternative kann hierzu an beiden Schenkeln jeweils ein oder mehrere Kontaktmittel vorgesehen sein, die bei Berührung durch den zwischen den Schenkeln befindlichen Artikel miteinander elektrisch verbindbar sind und ein Stromkreis schließbar ist, wozu erfindungsgemäß die Schenkel ganz oder teilweise aus isolierendem Material bestehen können, oder zumindest teilweise mit isolierendem Material belegt sind und das oder die Kontaktmittel an isolierten Bereichen der Schenkel angeordnet sind. Diese Kontaktmittel können beispielsweise kurze Leiterbahnabschnitte oder dergleichen sein. Diese Erfindungsausgestaltung nutzt die gegebene, wenngleich geringe Leitfähigkeit des gegriffenen Artikels, um auf diese Weise durch Schließen des Stromkreises, innerhalb welchen die Kontaktmittel integriert sind ein hinreichendes Signal gegeben werden kann. Alternativ hierzu kann das Mittel erfindungsgemäß auch ein optisches Sensormittel sein, beispielsweise in Form einer Reflexionslichtschranke, die an einem Schenkel angeordnet ist und das vom im Falle eines korrekten Begriffs zwischen den Schenkeln befindlichen Artikel reflektierte Licht zur Signalgeneration mißt. Auch kann es sich bei dem Mittel um eine Gewichtserfassungseinrichtung handeln, insbesondere in Form eines Dehnungsmeßstreifens, die bei angehobener Greifereinrichtung aufgrund des gegriffenen und an der Greifereinrichtung hängenden Artikels betätigbarer ist. Bei nicht gegriffenem Artikel wird kein oder ein entsprechendes Leersignal gegeben.

Neben der entsprechenden Ausbildung der Greifereinrichtung bzw. der Anordnung von entsprechenden Mitteln zur Erfassung des korrekten Artikelgriffs sollte ferner ebenfalls gewährleistet sein, daß bereits beim Positionieren der Greifereinrichtung bezüglich der Artikel sichergestellt wird, daß eine einen korrekten Angriff überhaupt zulassende Position erreicht bzw. eingenommen ist. Zu diesem Zweck kann der erfindungsgemäßen Greifereinrichtung wenigstens ein Sensorelement zum Detektieren der Lagebeziehung der Greifereinrichtung zum obenliegenden Artikel zugeordnet sein, wobei das oder die Sensorelemente erfindungsgemäß als an der Greifereinrichtung derart angeordnete Tast- oder Berührungsschalter ausgebildet sein können, daß ein zur Steuerung des Betriebs erforderliches Signal bei hinreichender, den Angriff am Artikel ermöglichender Positionierung gebbar ist. Mittels dieser Sensorselemente, insbesondere den Tast- oder Berührungsschaltern kann die Position der Greifereinrichtung zum obenliegenden Artikel vorteilhaft ermittelt werden, wobei zweckmäßiger Weise bei hinreichender Positionierung ein entsprechendes Signal gegeben wird. Der Greiferbetrieb erfolgt dann vorteilhaft in Abhängigkeit des Detektionsergebnisses, d. h., das entsprechende Bewegungsmittel wird nur dann angesteuert, wenn eben das Positionierungssignal gegeben wird. Für den Fall, daß dieses Positionierungssignal nicht vorliegt, kann auch kein Greifen erfolgen. Entweder wird dann der Positionierungsvorgang wiederholt, oder aber es wird eine Fehlermeldung ausgegeben, da dann beispielsweise entweder keine Artikel mehr vorhanden sind, oder aber die Artikel beispielsweise so verrutscht sind, daß sie nicht mehr im Griffbereich der Greifereinrichtung liegen. Dabei können erfindungsgemäß zwei parallel oder in Reihe geschaltete Tast- oder Berührungsschalter vorgesehen sein, wobei diese zweckmäßigerweise derart geschaltet sein können, daß bei ihrer Betätigung ein Stromkreis geöffnet oder geschlossen wird. Alternativ zur Verwendung von Tast- oder Berührungsschaltern kann das oder die Sensorelemente auch als optische Sensorelemente ausgebildet sein.

Das mit geeigneten Anschlußeinrichtungen an eine externe Versorgungseinrichtung versehene Bewegungsmittel kann erfindungsgemäß an der Greifereinrichtung integriert sein. Gemäß einer zweckmäßigen Weiterbildung der Erfindung kann vorgesehen sein, daß eine Befestigungsaufnahme für eine Lagerwelle des externen Bewegungsmechanismus vorgesehen ist, um auf diese Weise beispielsweise die Integration der Greifereinrichtung in die aus der vorgenannten Patentanmeldung bekannte Kommissioniervorrichtung zu ermöglichen. Dabei kann die Befestigungsaufnahme im wesentlichen mittig angeordnet sein und Einrichtungen zum Einstellen der Befestigungslage der Greifereinrichtung an der Lagerwelle vorgesehen sein. Auf diese Weise ist es möglich, die relative Lage der Greifereinrichtung bezüglich der Ebene, in der die Artikel angeordnet sind, einzustellen, das heißt, letztlich ist es möglich, die Greifereinrichtung um die Lagerwellenachse etwas zu verdrehen und in der gewünschten Stellung zu befestigen. Dies kann beispielsweise mittels entsprechender Schraubenverbindungen oder dergleichen erfolgen. Als besonders zweckmäßig hat es sich erwiesen, wenn die Greifereinrichtung erfindungsgemäß ein die Schenkel tragendes, bezüglich der Befestigungsaufnahme nach Art einer Wippe gelagertes Chassis aufweist, wobei bei dieser Erfindungsausgestaltung zweckmäßigerweise die Schenkel am abgesenkten Ende und der oder die Tast- oder Berührungsschalter am anderen Ende des Chassis angeordnet sind. Diese Ausgestaltung ist dahingehend von Vorteil, daß zunächst die Schenkel am Artikel angreifen und zur Betätigung der Tast- oder Berührungsschalter die Greifereinrichtung noch weiter abgesenkt werden muß, bis daß die Schalter tragende Ende aufsetzt. Hierüber kann sichergestellt werden, daß die Schenkel hinreichend fest auf den Artikel gedrückt werden. Bedingt durch die Anordnung nach Art einer Wippe wird nach Beendigung des Entnahmevorgangs gleichzeitig sichergestellt, daß wieder eine Position eingenommen wird, in der die Schenkel den tiefsten Punkt der Einrichtung bilden. Für den Fall, daß die Greifereinrichtung nicht vollständig oberhalb des Artikels positioniert, sondern seitlich versetzt ist, so daß das die Tast- oder Berührungsschalter tragende Ende seitlich versetzt neben dem Artikel liegt und infolgedessen beim Absenken nicht auf den Artikel zwecks Betätigung gedrückt werden kann, kann erfindungsgemäß vorgesehen sein, daß der Befestigungsaufnahme ein feststehendes Betätigungsteil für den oder die Tast- oder Berührungsschalter zugeordnet ist, auf das der oder die Tast- oder Berührungsschalter bei am Artikel angreifenden Schenkeln gedrückt werden. Wird also die Greifereinrichtung hinreichend positioniert, werden vorteilhaft infolge des Verschwenkens der "Greiferwippe" auch zwingend die Schalter auf das Betätigungsteil, das beispielsweise plattenförmig ausgebildet sein kann, gedrückt und damit betätigt. Dabei kann vorteilhaft zwischen das Chassis und das Betätigungsteil ein Federelement geschaltet sein, womit das Chassis wieder in die Ausgangsstellung gedrückt wird. Schließlich können die Schenkel erfindungsgemäß zur Verbesserung des Angriffs und der Haftung am Artikel mit einem Gummiüberzug versehen sein.

Um den Halt des Artikels an der Greifereinrichtung noch weiter zu verbessern, kann erfindungsgemäß wenigstens ein im Bereich der Schenkel vorgesehenes Saugmittel vorgesehen sein, mittels welchem der Artikel bzw. dessen Verpackung vor oder während dem Greifen ansaugbar ist. Hierdurch wird also der Artikel bzw. die Verpackung nicht nur mittels der Schenkel gegriffen, sondern zusätzlich auch noch mittels des Saugmittels gehalten, es ist also eine kombinierte Fixierung gegeben. Das Saugmittel kann dabei derart angeordnet sein, daß es am Artikel bzw. dessen Verpackung direkt angreift, wobei das Saugmittel zweckmäßigerweise einen elastischen Sauger, insbesondere aus Gummi, welcher beweglich und komprimierbar ist und nach Art eines Rüssels ausgebildet sein kann, umfaßt.

Vor allem bei etwas strafferen Verpackungen, bspw. etwas stärkeren Folien, wäre es zweckmäßig, sicherzustellen, daß auf jeden Fall unabhängig vom eigentlichen Greifermechanismus ein Verpackungsabschnitt in den Bereich zwischen die Schenkel gebracht wird. Um dies zu ermöglichen kann erfindungsgemäß das Saugmittel vor dem Schließen der Schenkel näher zum zu bewegenden Artikel stehen als die Schenkel selbst, wobei die Schenkel während des Schließens in eine bzgl. des Saugmittels niedrigere Position bringbar sind. Hierdurch ist also ein regelrechtes Einsaugen bzw. Einziehen des Folienabschnitts in den Bereich zwischen die Schenkel ermöglicht, so daß diese auch tatsächlich die Verpackung greifen können. Das Saugmittel kann zu diesem Zweck zwischen den Schenkeln angeordnet und von diesen umgreifbar sein, wozu zweckmäßigerweise jeder Schenkel zwei voneinander beabstandete Fortsätze aufweist, welche während des Schließens der Schenkel am dazwischen angeordneten Saugmittel vorbeiführbar sind. Um das Saugmittel nicht auch während des Transportes des Artikels in Richtung des Fördermittels hin betreiben zu müssen, was insbesondere dann nicht unbedingt nötig ist, wenn es im wesentlichen zum Einziehen eines Verpakkungsabschnitts zwischen die Schenkel angeordnet ist, kann erfindungsgemäß ein Sensor, insbesondere in Form eines Tastschalters vorgesehen sein, welcher bei geschlossenen Schenkeln und damit bei gegriffenem Artikel betätigbar ist, und bei dessen Betätigung das Saugmittel abschaltbar ist.

Neben der Greifereinrichtung selbst betrifft die Erfindung ferner eine Kommissioniervorrichtung zum Kommissionieren von Softgood-Artikeln, bei der aufeinandergestapelte Softgood-Artikel mittels einer oder mehreren zangenartigen Greifereinrichtungen oberseitig greifbar und abnehmbar sind, wobei erfindungsgemäß die Greifereinrichtung(en) wie beschrieben ausgebildet sein können. Dabei ist es möglich, daß jedem Aufnahmefach oder jedem Aufnahmeschacht, von denen die Kommissioniervorrichtung eine Vielzahl neben- und übereinander angeordnet aufweist, mehrere Greifeinrichtungen zugeordnet sind, die zweckmäßigerweise neben- und/oder hintereinander angeordnet sein können. Hierdurch ist es möglich, auch große Artikel wie bspw. eine Matratze, große Kleidungsstücke oder dergleichen sicher greifen und befördern zu können. Dabei können erfindungsgemäß die Greifereinrichtungen eines Aufnahmefachs oder Aufnahmeschachtes im wesentlichen synchron bewegbar sein, alternativ kann auch jede Greifereinrichtung in Abhängigkeit eines Signals eines Sensorelements zur Erfassung der Lagebeziehung der Greifereinrichtung zum oberen Artikel betätigbar sein.

Weitere Vorteile, Merkmale und Einzelheiten der Erfindung ergeben sich aus den im folgenden beschriebenen Ausführungsbeispielen sowie anhand der Zeichnungen. Diese zeigen:
- Fig. 1: eine Seitenansicht einer Greifereinrichtung einer ersten Ausführungsform mit in der Nichtarbeitsstellung befindlichen Schenkeln,
- Fig. 2: die Greifereinrichtung aus Fig. 1 mit in Arbeitsstellung befindlichen, geschlossenen Schenkeln,
- Fig. 3: eine Seitenansicht einer Greifereinrichtung einer zweiten Ausführungsform mit in der Nichtarbeitsstellung befindlichen Schenkeln,
- Fig. 4: die Greifereinrichtung aus Fig. 3 mit geschlossenen Schenkeln,
- Fig. 5: eine perspektivische Ansicht der Greifereinrichtung der Fig. 3, 4.
- Fig. 6: eine Seitenansicht einer Greifereinrichtung einer dritten Ausführungsform mit Saugmittel mit offenen Schenkeln,
- Fig. 7: die Greifereinrichtung aus Fig. 6 mit geschlossenen Schenkeln, und
- Fig. 8: eine Ansicht einer Kommissioniervorrichtung.

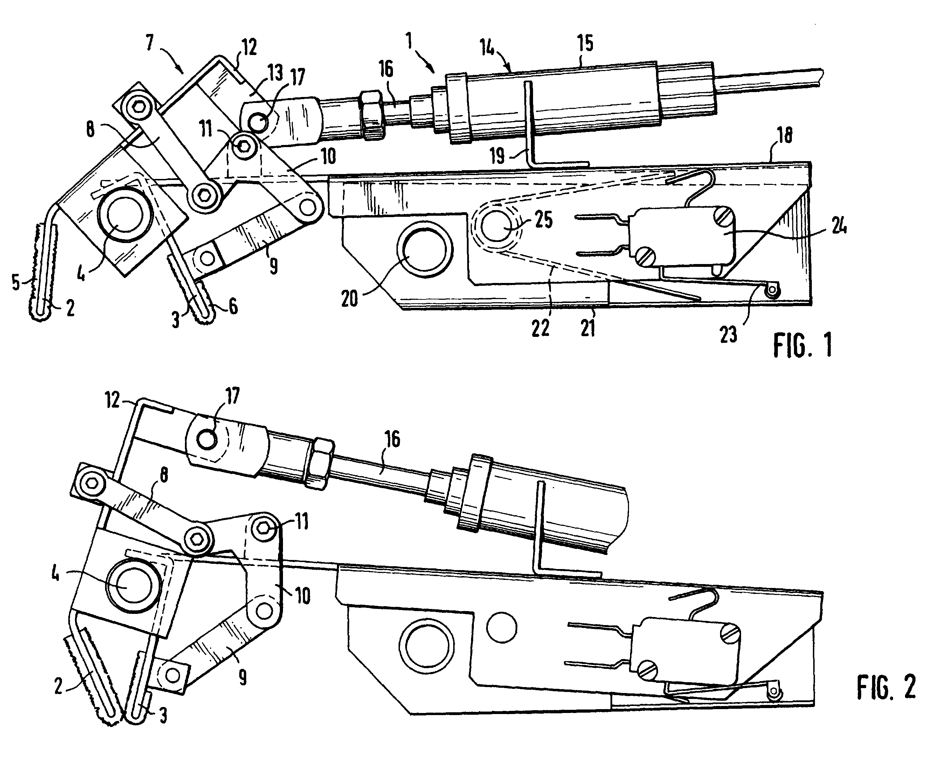

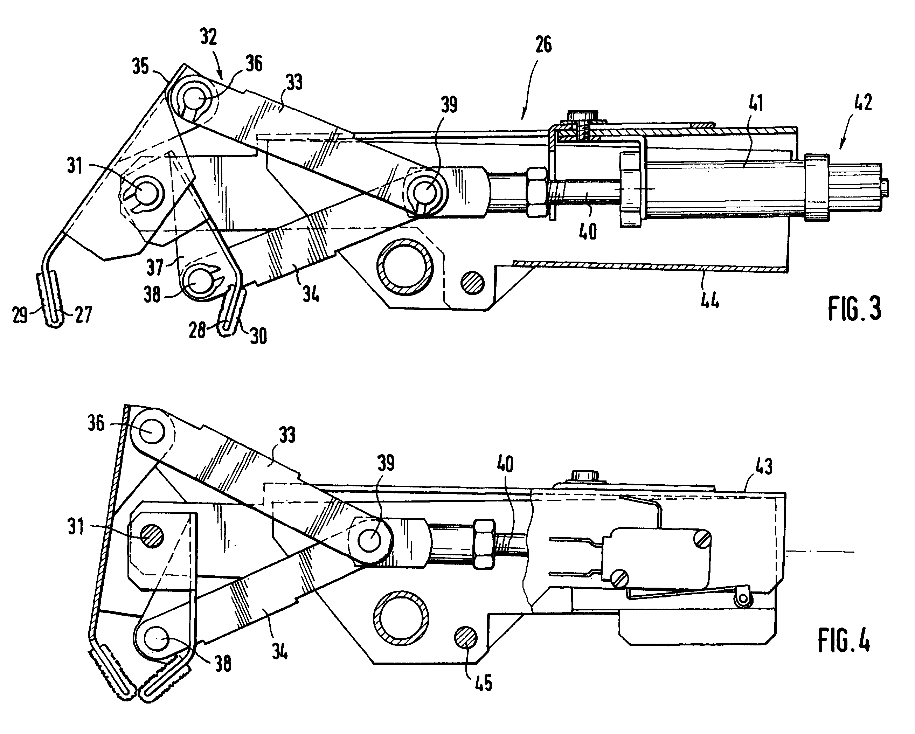

Fig. 1 zeigt eine Greifereinrichtung 1, an deren einem Ende zwei Schenkel 2, 3 um eine gemeinsame Schwenkachse 4 beweglich gelagert sind. Die Schenkel sind mit Gummiauflagen 5, 6 umhüllt, um den Angriff am jeweiligen Artikel zu verbessern. Zur Bewegung der beiden Schenkel 5, 6 von der in Fig. 1 gezeigten offenen Stellung in die in Fig. 2 gezeigte geschlossene Stellung ist eine mechanische Gelenkverbindung 7 vorgesehen, hier in Form eine Gelenkgestänges. Die Gelenkverbindung umfaßt mehrere Gelenkhebel 8, 9, 10, die miteinander gelenkig verbunden sind, wobei der als Kniehebel ausgebildete Hebel 10 um eine feste Schwenkachse 11 bewegbar ist. Am hinteren Ende 12 des Schenkels 2 ist ein Lagerabschnitt 13 vorgesehen, an dem ein Betätigungsmittel 14 in Form eines pneumatischen Zug-Druckzylinders 15 mit seiner Schubstange 16 an der Schwenkachse 17 angelenkt ist. Das Bewegungsmittel 14 ist am Chassis 18 der Greifereinrichtung 1 an einem Halterungssteg 19 etwas beweglich gelagert, wie die Fig. 1 und 2 zeigen. Zum Schließen der beiden Schenkel 2, 3 wird das Bewegungsmittel 15 entsprechend pneumatisch beaufschlagt, wodurch die Schubstange 16 ausgefahren wird. Dies hat zur Folge, daß das freie Ende 12 des Schenkels 2 ausgehend von Fig. 1 nach links verschoben wird, das andere Ende entsprechend um die Schwenkachse 4 nach rechts. Bedingt durch die von der Gelenkverbindung 7 hervorgerufene Zwangskopplung wird gleichzeitig mit entsprechender Bewegung der Hebel 8, 9, 10 der Schenkel 3 nach links bewegt, in die in Fig. 2 gezeigt Arbeitsstellung, in der sich dann im Falle eines Angriffs am Artikel normalerweise ein Artikelabschnitt zwischen den Schenkeln befindet.

Gezeigt ist ferner eine Lageraufnahme 20, durch welche eine Lagerwelle läuft, die zu einem externen Bewegungsmechanismus für die Greifereinrichtung dient. Mittels dieses Bewegungsmechanismus ist es möglich, die Greifereinrichtung entsprechend auf- und abwärts zu bewegen, um sie einerseits auf den jeweiligen Artikel abzusenken und andererseits den gegriffenen Artikel anzuheben. Im Bereich der Lageraufnahme 20 ist ferner ein Bodenteil 21 angeordnet, daß sich bis zum hinteren Ende des Chassis 18 erstreckt. Dieses ist mittels einer Feder 22 bezüglich des oberen Chassis 18 federbeaufschlagt. Das Bodenteil 21 dient zum Gegenlagern des Kontaktarms 23 eines Tastschalters 24, der an einer Seitenwand des Chassis 18 angeordnet ist. Dieser Tastschalter 24 dient zur Erfassung der korrekten Lageposition der Greifereinrichtung 1 bezüglich des anzuhebenden Artikels. Wird der Kontakt geschlossen, also der Tastschalter 24 betätigt, bedeutet dies, daß die Greifereinrichtung 1 richtig positioniert ist und ein korrekter Angriff am Artikel möglich ist. Die Funktionsweise ist nur derart, daß zunächst die Schenkel 2, 3 am Artikel angreifen. Infolge ihrer Auflagerung wird das gesamte Chassis 18 bezüglich des feststehenden Bodenteils 21 um die Achse 25, an welcher das Chassis 18 und das feststehende Bodenteil 21 nach Art einer Wippe bezüglich einander gelagert sind, herumgeschwenkt, also quasi in Richtung des Bodenteils 21 abgesenkt, wie Fig. 2 zeigt. Dies bewirkt, daß der Kontaktarm 23 gedrückt wird und der Tastschalter 24 betätigt wird.

Eine zweite Ausführung einer erfindungsgemäßen Greifereinrichtung 26 zeigen die Fig. 3 - 5. Diese besteht ebenfalls aus zwei Schenkeln 27, 28, die ebenfalls mit entsprechenden Gummiauflagen 29, 30 versehen sind. Auch hier sind beide Schenkel 27, 28 um eine gemeinsame Schwenkachse 31 bewegbar und über eine gemeinsame Gelenkverbindung 32 miteinander zwingend bewegungsgekoppelt. Bei dieser Ausgestaltung ist die Gelenkverbindung 32 etwas anders ausgeführt. Diese umfaßt zwei Hebel 33, 34, wobei der Hebel 33 am oberen Ende 35 des Schenkels 27 über eine Schwenkachse 36 gelagert ist, und der Hebel 34 an einem nach innen gezogenen Lagerabschnitt 37 des Schenkels 28 in der Schwenkachse 38 gelagert ist. Die beiden Hebel 33, 34 wiederum sind an einer gemeinsamen Schwenkachse 39 miteinander verbunden, an welcher auch die Schubstange 40 des als pneumatischer Zug-Druckzylinder 41 ausgebildeten Bewegungsmittel 42 angreift. Die Arbeitsweise ist ähnlich der in den Fig. 1, 2 beschriebenen, d. h., bei Betätigung des Bewegungsmittels 42 werden die beiden Schenkel 27, 28 zueinander geführt. Bei dieser Ausgestaltung vollführt jedoch die Schubstange 40 eine rein lineare Bewegung, d. h., eine bewegliche Lagerung des Bewegungsmittels 42 ist hier nicht erforderlich. Der weitere Aufbau betreffend die Lageraufnahme, sowie die Ausbildung und Anordnung des Chassis 43 und des Bodenteils 44, die auch hier nach Art einer Wippe um die Schwenkachse 45 beweglich zueinander gelagert sind, entspricht insoweit der Ausführungform gemäß den Fig. 1 und 2.

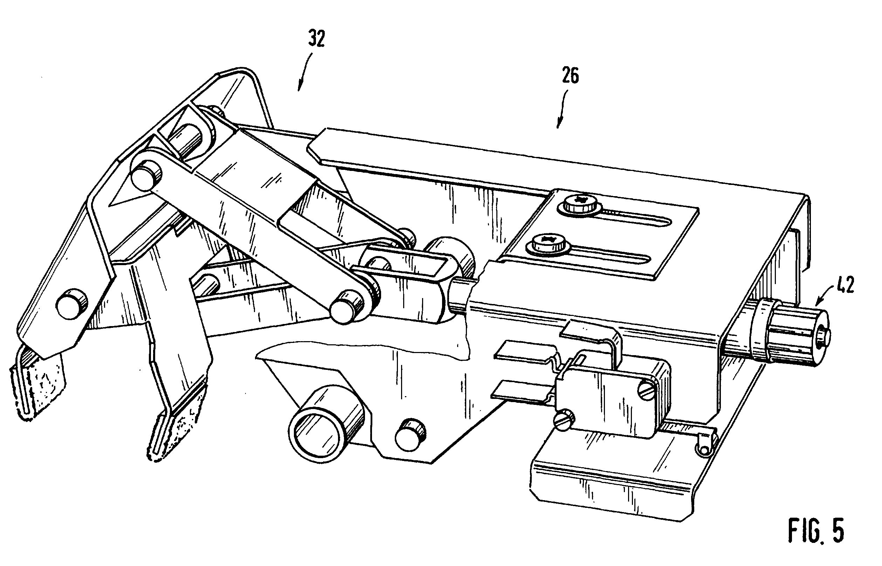

Schließlich zeigt Fig. 5 eine perspektivische Ansicht der Greifereinrichtung 26 der Fig. 3, 4. Hieraus ist insbesondere der genaue Aufbau der Gelenkverbindung zu entnehmen. Ersichtlich sind die Hebel 33, 34 jeweils zwei Mal vorhanden und mit entsprechenden Verbindungsabschnitten miteinander verbunden. Gezeigt ist ferner, daß die Schenkel 27, 28 (gleiches gilt auch für die Schenkel 2, 3) sich nicht durchgehend über die gesamte Breite der Einrichtung erstrecken, sondern nach Art relativer schmaler Fortsätze ausgebildet sind.

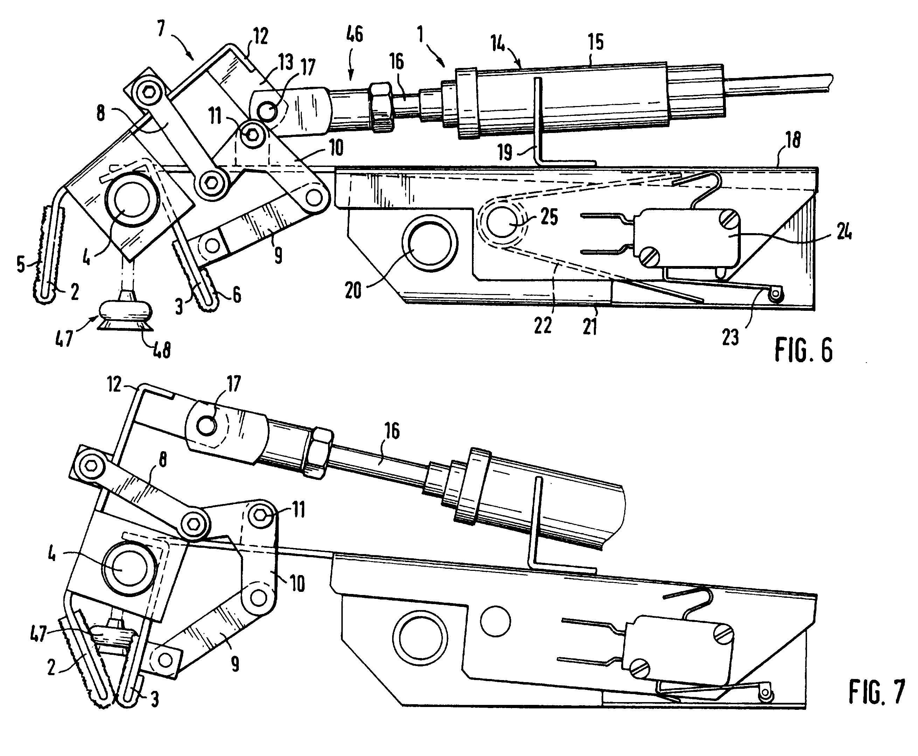

Die Fig. 6 und 7 zeigen eine zweite Ausführungsform einer Greifereinrichtung 46, die im Aufbau der Greifereinrichtung 1 aus Fig. 1 entspricht. Zusätzlich ist jedoch ein Saugmittel 47 in Form einer Gummisauglippe 48 vorgesehen, welche mit einer nicht gezeigten Pumpe oder dergleichen in Verbindung steht. Das Saugmittel 47 ist dabei so angeordnet, vgl. Fig. 6, daß es vor den Schenkeln auf dem Artikel aufsetzbar ist und dessen Verpackung, bspw. eine Folie, ansaugen kann. Das Saugmittel 47 ist dabei im Bereich zwischen den Schenkeln, die - vgl. Fig. 5 - aus zwei seitlichen Fortsätzen bestehen, angeordnet und kann von diesen umgriffen werden. Die Anordnung bzw. Ausgestaltung ist dabei derart, daß, vgl. Fig. 7, die beiden Schenkel durch die Greifbewegung in eine solche Position gebracht werden, daß das Saugmittel 47 quasi zwischen die Schenkel eingezogen ist oder wird und mithin auch der entsprechende Folienabschnitt hochgezogen ist. Der Folienabschnitt wird also regelrecht zwischen die Schenkelabschnitte hineingezogen, so daß diese denselben sicher greifen können. Das Saugmittel 47 bzw. dessen zugeordnete Pumpe kann mittels eines nicht gezeigten Tastschalters derart betätigt werden, daß bspw. bei eingezogenem Saugmittel die Pumpe automatisch abgeschaltet wird infolge der Tasterbetätigung, so daß diese also während des Artikeltransports nicht mehr betrieben wird.

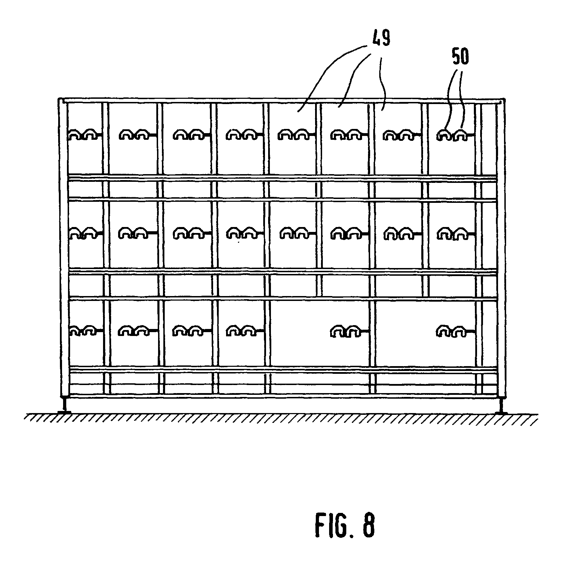

Schließlich zeigt Fig. 8 eine Ansicht einer erfindungsgemäßen Kommissioniervorrichtung. Diese besteht aus mehreren einzelnen Aufnahmefächern 49. Jedem Aufnahmefach 49 sind im gezeigten Beispiel zwei Greifereinrichtungen 50 zugeordnet, die hier nebeneinander dargestellt sind. Gleichermaßen können die Greifereinrichtungen 50 auch hintereinander oder neben- und hintereinander angeordnet sein, jeweils abhängig von der Größe des zu transportierenden Artikels. Zweckmäßigerweise werden die Greifereinrichtungen 50 synchron betätigt. Selbstverständlich kann jedem Aufnahmefach 49 auch nur eine einzelne Greifereinrichtung zugeordnet sein.

## Patentansprüche

1. Zangenartige Greifereinrichtung zum Greifen eines mittels dieser zu bewegenden Softgood-Artikels, insbesondere für eine Kommissioniervorrichtung zum Kommissionieren von Softgood-Artikeln, wobei die Greifereinrichtung mittels eines externen Bewegungsmechanismus maschinell bewegbar ist, und zwei Schenkel (2, 3, 27, 28) aufweist, zwischen denen ein Abschnitt des Artikels aufnehmbar ist, wobei beide Schenkel (2, 3, 27, 28) beweglich gelagert und zwischen einer den Artikel greifenden Arbeitsstellung und einer Nichtarbeitsstellung mittels eines Bewegungsmittels (14, 42) bewegbar sind.

2. Greifereinrichtung nach Anspruch 1, dadurch gekennzeichnet, daß beide Schenkel (2, 3, 27, 28) um eine gemeinsame Achse (4, 31) oder um jeweils separate, zueinander im wesentlichen parallele Achsen schwenkbar gelagert sind.

3. Greifereinrichtung nach Anspruch 1 oder 2, dadurch gekennzeichnet, daß die beiden Schenkel (2, 3, 27, 28) über ein Gelenkverbindung (7, 32), insbesondere ein Gelenkgestänge miteinander bewegungsgekoppelt und mittels des gemeinsamen, an der Gelenkverbindung angreifenden Bewegungsmittels (14, 42) bewegbar sind.

4. Greifereinrichtung nach einem der vorangehenden Ansprüche, dadurch gekennzeichnet, daß die Greifereinrichtung derart ausgebildet ist, oder daß derart ausgebildete Mittel vorgesehen sind, daß in Verbindung mit einer gegebenenfalls externen Ermittlungseinrichtung ein sich zwischen den Schenkeln befindlicher Abschnitt des gegriffenen Artikels ermittelbar ist.

5. Greifereinrichtung nach Anspruch 4, dadurch gekennzeichnet, daß an beiden Schenkeln jeweils ein oder mehrere Kontaktmittel vorgesehen sind, die bei Berührung durch den zwischen den Schenkeln befindlichen Artikel miteinander elektrisch verbindbar sind und ein Stromkreis schließbar ist.

6. Greifereinrichtung nach Anspruch 5, dadurch gekennzeichnet, daß die Schenkel ganz oder teilweise aus isolierendem Material bestehen, oder zumindest teilweise mit isolierendem Material belegt sind, wobei das oder die Kontaktmittel an isolierten Bereichen der Schenkel angeordnet sind.

7. Greifereinrichtung nach Anspruch 4, dadurch gekennzeichnet, daß das Mittel ein optisches Sensormittel ist.

8. Greifereinrichtung nach Anspruch 4, dadurch gekennzeichnet, daß das Mittel eine Gewichtserfassungseinrichtung, insbesondere in Form eines Dehnungsmeßstreifens ist, die bei angehobener Greifereinrichtung aufgrund des gegriffenen und an der Greifereinrichtung hängenden Artikels betätigbar ist.

9. Greifereinrichtung nach einem der vorangehenden Ansprüche, dadurch gekennzeichnet, daß ihr wenigstens ein Sensorelement zum Detektieren der Lagebeziehung der Greifereinrichtung zum obenliegenden Artikel zugeordnet ist.

10. Greifereinrichtung nach Anspruch 9, dadurch gekennzeichnet, daß das oder die Sensorelemente als an der Greifereinrichtung (1, 26) derart angeordnete Tast- oder Berührungsschalter (24) ausgebildet sind, daß ein zur Steuerung des Betriebs erforderliches Signal bei hinreichender, den Angriff am Artikel ermöglichender Positionierung gebbar ist.

11. Greifereinrichtung nach Anspruch 10, dadurch gekennzeichnet, daß zwei parallel oder in Reihe geschaltete Tast- oder Berührungsschalter vorgesehen sind.

12. Greifereinrichtung nach Anspruch 11, dadurch gekennzeichnet, daß der oder die Tast- oder Berührungsschalter (24) derart geschaltet sind, daß bei ihrer Betätigung ein Stromkreis geöffnet oder geschlossen wird.

13. Greifereinrichtung nach Anspruch 9, dadurch gekennzeichnet, daß das Sensorelement als optisches Sensorelement ausgebildet ist.

14. Greifereinrichtung nach einem der vorangehenden Ansprüche, dadurch gekennzeichnet, daß das Bewegungsmittel (14, 42), das die Schenkel bewegt, ein pneumatisches, elektrisches oder elektromagnetisches Mittel ist.

15. Greifereinrichtung nach Anspruch 14, dadurch gekennzeichnet, daß das mit geeigneten Anschlußeinrichtungen an eine externe Versorgungseinrichtung versehene Bewegungsmittel (14, 42) an der Greifereinrichtung (1, 26) integriert ist.

16. Greifereinrichtung nach einem der vorangehenden Ansprüche, dadurch gekennzeichnet, daß eine Befestigungsaufnahme (20) für eine Lagerwelle des externen Bewegungsmechanismus vorgesehen ist.

17. Greifereinrichtung nach Anspruch 16, dadurch gekennzeichnet, daß die Befestigungsaufnahme (20) im wesentlichen mittig angeordnet ist und Einrichtungen zum Einstellen der Befestigungslage der Greifereinrichtung an der Lagerwelle vorgesehen sind.

18. Greifereinrichtung nach einem der vorangehenden Ansprüche, dadurch gekennzeichnet, daß sie ein die Schenkel (2, 3, 27, 28) tragendes, bezüglich der Befestigungsaufnahme (20) nach Art einer Wippe gelagertes Chassis (18, 43) aufweist.

19. Greifereinrichtung nach Anspruch 18, dadurch gekennzeichnet, daß die Schenkel (2, 3, 27, 28) am abgesenkten Ende und der oder die Tast- oder Berührungsschalter (24) am anderen Ende des Chassis (18, 43) angeordnet sind.

20. Greifereinrichtung nach Anspruch 17 und Anspruch 19, dadurch gekennzeichnet, daß der Befestigungsaufnahme (20) ein feststehendes Betätigungsteil (21, 44) für den oder die Tast- oder Berührungsschalter (24) zugeordnet ist, auf das der oder die Tast- oder Berührungsschalter (24) bei am Artikel angreifenden Schenkeln (2, 3, 27, 28) gedrückt werden.

21. Greifereinrichtung nach Anspruch 20, dadurch gekennzeichnet, daß zwischen das Chassis (18) und das Betätigungsteil (21) ein Federelement (22) geschaltet ist.

22. Greifereinrichtung nach einem der vorangehenden Ansprüche, dadurch gekennzeichnet, daß die Schenkel (2, 3, 27, 28) mit einem Gummiüberzug (5, 6, 29, 30) versehen sind.

23. Greifereinrichtung nach einem der vorangehenden Ansprüche, gekennzeichnet durch wenigstens ein im Bereich der Schenkel vorgesehenes Saugmittel (47), mittels welchem der Artikel bzw. dessen Verpackung vor oder während dem Greifen ansaugbar ist.

24. Greifereinrichtung nach Anspruch 23, dadurch gekennzeichnet, daß das Saugmittel (47) derart angeordnet ist, daß es am Artikel bzw. dessen Verpackung direkt angreift.

25. Greifereinrichtung nach Anspruch 23 oder 24, dadurch gekennzeichnet, daß das Saugmittel (47) einen vorzugsweise am Artikel bzw. der Verpakkung angreifenden elastischer Sauger (48), insbesondere aus Gummi umfaßt.

26. Greifereinrichtung nach einem der Ansprüche 23 bis 25, dadurch gekennzeichnet, daß das Saugmittel (47) vor dem Schließen der Schenkel näher zum zu bewegenden Artikel steht als die Schenkel selbst, und daß die Schenkel während des Schließens in eine bezüglich des Saugmittels (47) niedrigere Position bringbar sind.

27. Greifereinrichtung nach einem der Ansprüche 23 bis 26, dadurch gekennzeichnet, daß das Saugmittel (47) zwischen den Schenkeln angeordnet und von diesen umgreifbar ist.

28. Greifereinrichtung nach Anspruch 27, dadurch gekennzeichnet, daß jeder Schenkel zwei voneinander beabstandete Fortsätze aufweist, welche während des Schließens der Schenkel am dazwischen angeordneten Saugmittel (47) vorbeiführbar sind.

29. Greifereinrichtung nach einem der Ansprüche 23 bis 28, dadurch gekennzeichnet, daß ein Sensor, insbesondere in Form eines Tastschalter vorgesehen ist, welcher bei geschlossenen Schenkeln und damit bei gegriffenem Artikel betätigbar ist, und bei dessen Betätigung das Saugmittel (47) abschaltbar ist.

30. Kommissioniervorrichtung zum Kommissionieren von Softgood-Artikeln, bei der aufeinandergestapelte Softgood-Artikel mittels einer oder mehreren zangenartigen Greifereinrichtungen oberseitig greifbar und abnehmbar sind, dadurch gekennzeichnet, daß die Greifereinrichtung(en) nach einem der Ansprüche 1 bis 29 ausgebildet sind.

31. Kommissioniervorrichtung nach Anspruch 30, welche mehrere separate Aufnahmefächer oder Aufnahmeschächte, in denen sich die Artikel befinden, aufweist, dadurch gekennzeichnet, daß jedem Aufnahmefach (49) oder Aufnahmeschacht mehrere Greifereinrichtungen (50) zugeordnet sind.

32. Kommissioniervorrichtung nach Anspruch 31, dadurch gekennzeichnet, daß die Greifereinrichtungen (50) neben- und/oder hintereinander angeordnet sind.

33. Kommissioniervorrichtung nach Anspruch 31 oder 32, dadurch gekennzeichnet, daß die Greifereinrichtungen (50) eines Aufnahmefachs oder Aufnahmeschachtes im wesentlichen synchron betätigbar sein, oder daß jede Greifereinrichtung (50) in Abhängigkeit des Signals eines Sensorelements zur Erfassung der Lagebeziehung betätigbar sein.
